# EUROPÄISCHE PATENTSCHRIFT

(11) **EP 1 110 378 B1**
(45) Veröffentlichungstag und Bekanntmachung des Hinweises auf die Patenterteilung: **20.03.2002**
(21) Anmeldenummer: 99952304.6
(22) Anmeldetag: 04.08.1999
(51) Int. Cl.: H04N 5/14, H04N 7/50

(54) **VERFAHREN ZUM WAHLFREIEN ZUGRIFF AUF BILDBLÖCKE IN VIDEOBILDERN**
RANDOM ACCESS METHOD FOR BLOCKS OF VIDEO IMAGES
PROCEDE D'ACCES ALEATOIRE A DES BLOCS D'IMAGE DANS DES IMAGES VIDEO

(30) Priorität: 06.08.1998 DE 19835607
(43) Veröffentlichungstag der Anmeldung: 27.06.2001
(73) Patentinhaber: Infineon Technologies AG, 81669 München (DE)
(72) Erfinder: MENKHOFF, Andreas, D-81927 München (DE); SCHEFFLER, Günter, D-80939 München (DE)
(74) Vertreter: Banzer, Hans-Jörg, Dipl.-Ing.
(86) Internationale Anmeldenummer: DE9902447
(87) Internationale Veröffentlichungsnummer: WO0008844

(56) Entgegenhaltungen:
- EP-A- 0 587 443
- EP-A- 0 674 438
- US-A- 4 683 497
- US-A- 4 922 437

## Beschreibung

Die Erfindung bezieht sich auf ein Verfahren, das einen wahlfreien Zugriff auf Bildblöcke in einem Videobild, beispielsweise einem Fernsehbild, erlaubt.

In der Bildverarbeitung muß häufig auf Bildbereiche zusammenhängender oder benachbarter Bildpunkte zurückgegriffen werden, um die Bereiche einem Vergleich der Bildinhalte oder einer Filterfunktion zu unterziehen. Videobilder werden in der Regel aus einer Abfolge von aufeinanderfolgenden Bildpunkten zusammengesetzt. Die Daten der Bildpunkte werden derart übertragen, daß der Aufbau einer Bildzeile erst dann beginnt, wenn die vorangehende Bildzeile vollständig vorliegt. Bei Fernsehbildern, die im Zeilensprungverfahren übertragen werden, wird zunächst die erste Zeile (beispielsweise die zweite Zeile) eines ersten Teilbildes angezeigt, bevor die zweite Zeile dieses Halbbildes (beim obigen Beispiel dann die vierte Zeile) aufgebaut wird.

Aufgrund dieses zeilenweisen Aufbaues des Videobildes muß eine Zwischenspeicherung von Bildpunkten erfolgen, wenn unmittelbar nacheinander oder gleichzeitig auf Bildpunkte einer Bildspalte zugegriffen werden soll. Der zu einem bestimmten Bildpunkt in vertikaler Bildrichtung nächste Bildpunkt ist bei der beschriebenen sequentiellen Datenübertragung erst nach einer Verzögerung verfügbar. Bei einer Zwischenspeicherung -ist ein beliebiger Zugriff auf Bildblöcke, also einer Gruppe von Bildpunkten in horizontaler und vertikaler Nachbarschaft, möglich.

Zur Zwischenspeicherung eignen sich dynamische Speicher (DRAM), da sie bezogen auf die Chipfläche eine hohe Speicherkapazität aufweisen. Üblicherweise sind bei dynamischen Halbleiterspeichern die Speicherzellen in mehreren Speicherfeldblockeinheiten angeordnet. Bei einem Zugriff auf eine bestimmte Speicherzelle muß erst die Speicherfeldblockeinheit, die diese Zelle enthält, aktiviert werden. Liegen zwei Bildpunkte, auf die nahezu gleichzeitig zugegriffen werden soll, in verschiedenen Speicherfeldblockeinheiten, so muß erst die eine Einheit und anschließend die andere aktiviert werden, um den jeweiligen Bildpunkt auszulesen. Bei einer hohen Übertragungsrate der Bildpunkte ist eine Bildverarbeitung in Echtzeit dann nicht möglich. Der Zugriff auf zwei Bildpunkte, die in zwei verschiedenen Speicherfeldblockeinheiten angeordnet sind, ist insbesondere dann umständlich, wenn auf diese Bildpunkte für eine Bildverarbeitungsoperation, was häufig der Fall ist, mehrfach zugegriffen werden muß.

Aufgabe der vorliegenden Erfindung ist es daher, ein Verfahren zum wahlfreien Zugriff auf Bildblöcke in einem Videobild, das in einem Bildspeicher gespeichert ist, anzugeben, das mit nur geringem zusätzlichen Speicheraufwand durchgeführt werden kann. Diese Aufgabe wird durch ein Verfahren mit den Merkmalen des Patentanspruchs 1 gelöst.

Die Erfindung hat den Vorteil, daß bei einer im Verhältnis zur Anzahl der Bildpunkte des Videobildes geringen Größe des Zugriffsspeichers eine Bildverarbeitung, beispielsweise von Fernsehbildern, in Echtzeit möglich ist. Bezüglich der Zugriffszeit werden an den Zugriffsspeicher höhere Anforderungen gestellt als an den Bildspeicher. Aufgrund der vergleichsweisen geringen Kapazität des Zugriffsspeichers kann das erfindungsgemäße Verfahren dennoch kostengünstig durchgeführt werden. Innerhalb des ersten Bereichs des Zugriffsspeichers kann auf jeden einzelnen Bildpunkt zugegriffen werden.

Ein weiterer Vorteil ist, daß das Verhältnis der Datenrate am Ausgang des Zugriffsspeichers und der an seinem Eingang von der Größe des Hauptbildblocks bestimmt wird. Somit ist das Verhältnis der Datenrate zu der Größe des Zugriffsspeichers an die gegebenen Umstände anpaßbar.

Bei einer bevorzugten Ausführung ist der zweite Bereich des Zugriffsspeichers dreimal so groß wie der des Hauptbildblocks. Vorzugsweise besteht der erste Bereich des Zugriffsspeichers aus dem Hauptbildblock sowie 8 an ihn angrenzenden Nachbarbildblöcken mit der gleichen Größe wie der Hauptbildblock. Nach Durchführung der Bildverarbeitung für den Hauptbildblock wird der an der rechten Seite des bisherigen Hauptbildblocks angrenzende Nachbarbildblock zum neuen Hauptbildblock. Am Ende der Zeile des Videobildes geht der neue Hauptbildblock aus dem Nachbarbildblock hervor, der an die untere Seite des Hauptbildblocks bei seiner Position am Anfang der Zeile angrenzt. Typischerweise wandert der Hauptbildblock in horizontaler Richtung von links nach rechts über das Videobild. Ist der Hauptbildblock am Ende des Videobildes angelangt, wird er um die Höhe des Hauptbildblocks vertikal nach unten versetzt und in dieser Zeile an den linken Rand des Videobildes zurückgesetzt.

Es hat sich als zweckmäßig erwiesen, den Zugriffsspeicher so auszuführen, daß in seinem ersten Bereich ein Bild mit 48 Bildpunkten in horizontaler und 24 Bildpunkten in vertikaler Richtung und in seinem zweiten Bereich ein Bild mit 16 Bildpunkten in horizontaler und ebenfalls 24 Bildpunkten in vertikaler Richtung gespeichert werden können.

Als Ausführungen des Zugriffsspeichers eignen sich besonders statische Halbleiterspeicher (SRAM). Sie erlauben kurze Zugriffszeiten. Ihr auf die Speicherkapazität bezogener großer Flächenbedarf fällt nicht weiter ins Gewicht, da nur ein Bruchteil der Bildpunkte des Videobildes im Zugriffsspeicher abgespeichert wird.

Weitere vorteilhafte Aus- und Weiterbildungen sind in Unteransprüchen gekennzeichnet. Die Erfindung wird nachfolgend anhand von Figuren näher erläutert. Es zeigen
Figur 1: eine Veranschaulichung der Organisation des Zugriffsspeichers,
Figur 2: eine Darstellung zur Erläuterung des erfindungsgemäßen Verfahrens und
Figur 3: eine weitere Darstellung zur Erläuterung des erfindungsgemäßen Verfahrens bei einer anderen Größe des Hauptbildblocks.

Die Erfindung geht von einem aus Zeilen zusammengesetzten Videobild aus, das in horizontaler Richtung vollständig und in vertikaler Richtung zumindest teilweise in einem Bildspeicher abgespeichert ist. Das Videobild beispielsweise ein Halbbild eines zeilenverkämmten Fernsehbildes. Üblicherweise sind solche Bildspeicher dynamische Speicher (DRAMs), die kostengünstig mit hoher Integrationsdichte hergestellt werden können.

Aus dem Bildspeicher, der aus Speicherfeldblockeinheiten organisiert werden kann, werden nicht einzelne Bildpunkte ausgelesen, sondern ganze Speicherblöcke aus mehreren zusammenhängenden Bildpunkten. Als Speicherblock eignet sich eine Speicherfeldblockeinheit oder ein Teil davon. Der aus dem Bildspeicher ausgelesene Speicherblock wird in einem Zugriffsspeicher ZS, der eine kurze Zugriffszeit aufweist und ein zeitgleiches Ein- und Auslesen verschiedener Speicherplätze erlaubt, abgelegt. Auf die im Zugriffsspeicher ZS abgelegten Bildpunkte kann einzeln zugegriffen werden, um beispielsweise eine Filterfunktion auszuführen. Der Zugriffsspeicher ZS weist einen weiteren Bereich auf, in den der nächste zu bearbeitende Speicherblock eingelesen wird, während mit den Bildpunkten des bereits gespeicherten Speicherblocks eine Bildverarbeitungsoperation ausgeführt wird. Sobald diese Bildverarbeitungsoperation abgeschlossen ist, stehen die gerade eingelesenen Bildpunkte des weiteren Bereichs des Zugriffsspeichers ZS zur Bildverarbeitung zur Verfügung.

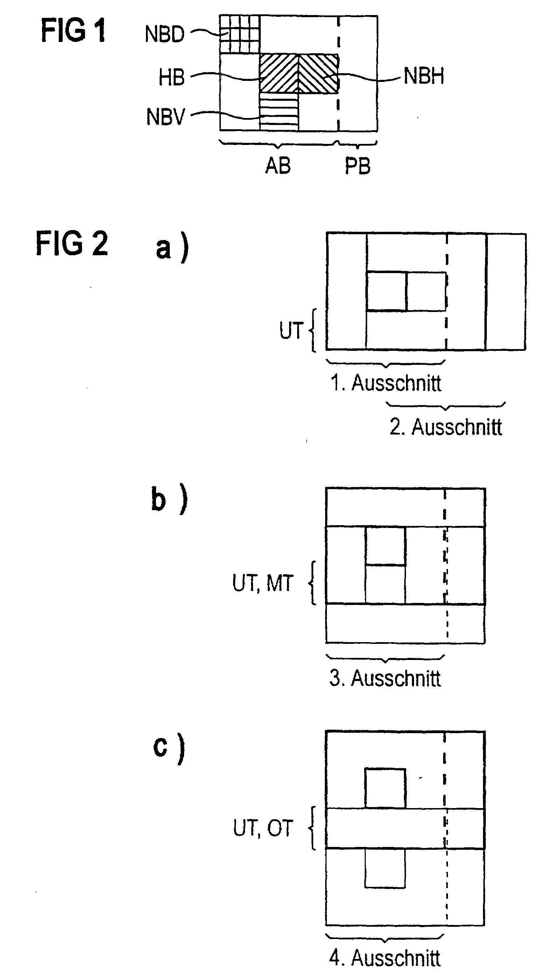

Figur 1 veranschaulicht die Organisation des Zugriffsspeichers ZS. Dieser ist in einen Arbeitsbereich AB und einen Pufferbereich PB unterteilt. Soll an dem Videobild eine Bildverarbeitungsoperation durchgeführt werden, so erfolgt dies ausschnittsweise. Es wird ein erster Ausschnitt ausgewählt, der beispielsweise aus der linken oberen Ecke des Videobildes besteht. Das Verfahren sieht vor, daß in dem ersten Ausschnitt ein Hauptbildblock HB liegt, an den wenigstens ein Nachbarbildblock NBH in horizontaler Richtung des Videobildes angrenzt. Üblicherweise ist der Hauptbildblock HB an all seinen Seiten und Kanten von Nachbarbildblöcken NB umgeben.

In Figur 1 sind außer dem Nachbarbildblock NBH in horizontaler Richtung auch ein Nachbarbildblock NBV in vertikaler Richtung und ein Nachbarbildblock NBB, der an die linke obere Kante des Hauptbildblocks HB angrenzt, durch jeweils unterschiedliche Schraffur hervorgehoben. Insgesamt ist der Hauptbildblock HB im Beispiel nach Figur 1 von 8 Nachbarbildblökken NB umgeben. Die Größe der Bildblöcke HB, NB, also jeweils die Anzahl der Bildpunkte in horizontaler und vertikaler Richtung, hängt von der Art der Bildverarbeitungsoperation ab.

Das Verfahren eignet sich besonders zur Ermittlung von Bewegung in Bildinhalten. Soll beispielsweise für ein rechteckiges Fenster eines Bildes in einer Bildfolge ein Bewegungsvektor ermittelt werden, wird die Größe des Hauptbildblocks HB entsprechend den Abmessungen des Fensters gewählt. Die Bildpunkte innerhalb des Fensters werden nun mit dem Hauptbildblock eines nachfolgenden Bildes in der Bildfolge verglichen. Die Position des Hauptbildblocks wird dabei so gewählt, daß sie mit der Position des Fenster übereinstimmt. Stimmen die Bildpunkte des Fensters unter Berücksichtigung gewisser Toleranzen mit denen des Hauptbildblocks überein, liegt keine Bewegung in dem durch das Fenster bestimmten Teilbild beim Übergang von dem Bild, aus dem das Fenster gewählt wurde, zu dem nachfolgenden Bild vor.

Durch Vergleiche der Bildpunkte des Fensters mit denen der Nachbarblöcke kann ein Bewegungsvektor für den Bildteil für den Übergang von dem Bild, aus dem das Fenster gewählt wurde, zu dem Bild, aus dem die Nachbarbildblöcke stammen, ermittelt werden. Dazu wird ein Maß der Übereinstimmung der Bildpunkte des Fensters mit denen der jeweiligen Nachbarbildblöcke bestimmt. Aus der Position des Nachbarbildblockes, der die größte Übereinstimmung aufweist, kann auf die Bewegung des Bildinhaltes des Fensters geschlossen werden. Die Größe der Nachbarbildblöcke NB richtet sich nach der durchschnittlich auftretenden Bewegung und wird empirisch ermittelt.

Im Pufferbereich PB des Zugriffsspeichers ZS wird ein Teil des Videobildes gespeichert, der an den ersten Ausschnitt angrenzt. In vertikaler Richtung umfaßt er so viele Bildpunkte wie der erste Ausschnitt in vertikaler Richtung aufweist. In horizontaler Richtung enthält er ebenso viele Bildpunkte wie der Hauptbildblock in dieser Richtung.

In einem ersten Schritt des Verfahrens wird der erste Ausschnitt des Videobildes im Arbeitsbereich AB des Zugriffsspeichers ZS gespeichert. Es sei angenommen, daß der erste Ausschnitt der linken oberen Ecke des Videobildes entspricht. Der Nachbarbildblock in diagonaler Richtung NBD liegt dann genau in der Ecke des Videobildes. Soll der Hauptbildblock HB in dieser Ecke liegen, können keine Nachbarbildblöcke oberhalb und links des Hauptbildblocks HB aus dem Videobild gewonnen werden. In diesem Fall und in anderen Fällen, in denen die zu berücksichtigenden Nachbarbildblöcke außerhalb des Videobildes liegen, wird für die Bildpunkte der betroffenen Nachbarbildblöcke ein durchschnittlicher Helligkeitswert angenommen.

Während auf die Bildpunkte des Arbeitsbereichs AB zugegriffen wird, um beispielsweise eine Bewegungsermittlung durchzuführen, wird in den Pufferbereich PB des Zugriffsspeichers ZS der Teil des Videobildes eingelesen, der an den ersten Ausschnitt angrenzt. Die Anzahl der Bildpunkte in vertikaler Richtung im Arbeitsbereich AB und im Pufferbereich PB sind gleich. In horizontaler Richtung sind im Pufferbereich PB so viele Bildpunkte gespeichert, wie der Hauptbildblock HB in horizontaler Richtung aufweist.

In einem zweiten Schritt wird im Arbeitsbereich AB ein zweiter Ausschnitt des Videobildes gespeichert, der aus dem ersten Ausschnitt durch Verschiebung in horizontaler Richtung um die Breite des Hauptbildblocks HB und den Bildpunkten des Pufferbereichs PB hervorgeht. Weisen Haupt- und Nachbarbildblöcke die gleiche Größe auf, so enthält der zweite Ausschnitt zwei Drittel der Bildpunkte des ersten Ausschnitts und die Bildpunkte des Pufferbereichs PB. Im zweiten Ausschnitt ist der Nachbarbildblock, der im ersten Ausschnitt rechts vom Hauptbildblock lag, nun der Hauptbildblock. Die Bildpunkte des zweiten Ausschnitts können nun wiederum einer Bildverarbeitungsfunktion unterzogen werden. Zeitgleich wird in den Pufferbereich PB ein Bildbereich des Videobildes eingelesen, der an den zweiten Ausschnitt angrenzt.

In Figur 2a ist die horizontale Verschiebung des zweiten Ausschnitts, der in dünner Linienstärke dargestellt ist, gegenüber dem ersten Ausschnitt (mit dickerer Linienstärke) dargestellt. Der zweite Schritt wiederholt sich, bis der Hauptbildblock am rechten Rand des Videobildes angelangt ist. Bereits einen Schritt davor können keine Bildpunkte aus dem Videobild in den Pufferbereich PB mehr gelesen werden, da kein an dem dann vorliegenden Ausschnitt angrenzender Teil des Videobildes vorhanden ist. Auch hier ist es möglich, in den Pufferbereich PB durchschnittliche Helligkeitswerte zu lesen.

In einem dritten Schritt wird ein dritter Ausschnitt des Videobildes in den Arbeitsbereich AB des Zugriffsspeichers ZS gelesen. Der dritte Ausschnitt ist gegenüber dem ersten Ausschnitt lediglich in vertikaler Richtung um so viele Bildpunkte, wie der Hauptbildblock in vertikaler Richtung umfaßt, verschoben. In Figur 2b ist wiederum der erste Ausschnitt mit dicker Linienstärke und der dazu verschobene dritte ausschnitt mit dünnerer Linienstärke dargestellt. Der untere Teil UT des ersten Ausschnitts entspricht dem mittleren Teil MT des dritten Ausschnitts. Bei einem vierten Ausschnitt, der gegenüber dem dritten Ausschnitt um die Anzahl der Bildpunkte des Hauptbildblocks in vertikaler Richtung vertikal verschoben ist, entspricht der obere Teil OT dem unteren Teil UT des ersten Ausschnitts. Das heißt, die Bildpunkte, die zu dem unteren Teil UT des ersten Ausschnitts gehören, werden bei diesem Beispiel dreimal aus dem Bildspeicher ausgelesen. Das Verhältnis der Ausgangsdatenrate zu der Eingangsdatenrate des Bildspeichers beträgt hier also drei. Der vierte Ausschnitt ist in Figur 2c dargestellt.

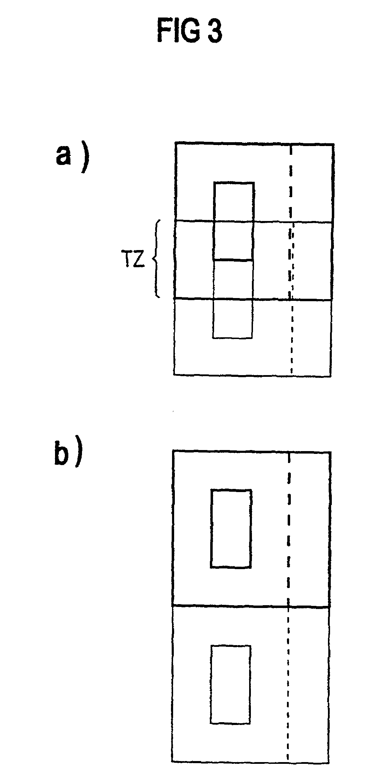

Figur 3 zeigt eine weitere Ausführungsform mit einem gegenüber der ersten Ausführungsform größeren zweiten Hauptbildblock. Dabei ist der zweite Hauptbildblock in vertikaler Richtung doppelt so groß wie bei der ersten Ausführungsform. Die in vertikaler Richtung und diagonal angrenzenden Nachbarbildblöcke weisen eine Größe wie bei der ersten Ausführungsform auf. Die seitlich an dem zweiten Hauptbildblock HBZ angrenzenden Nachbarbildblöcke sind so groß wie der zweite Hauptbildblock HBZ. Bei diesem Ausführungsbeispiel ist der Pufferbereich PB doppelt so groß wie der Arbeitsbereich AB des Zugriffsspeichers ZS. Der gewählte Ausschnitt bei der Startposition wird ein erstes (Figur 3a) und ein zweites Mal (Figur 3b) in vertikaler Richtung um so viele Bildpunkte nach unten verschoben, wie der zweite Hauptbildblock HBZ in vertikaler Richtung aufweist. Ein gewisser Teil TZ der Bildpunkte im Arbeitsbereich AB wird nach der Verschiebung, die in Figur 3a mit dünner Linienstärke eingetragen ist, erneut ausgelesen. Bei einer weiteren Verschiebung, wie sie in Figur 3b dargestellt ist, ist keine Überlappung zu den anfänglichen Ausschnitt vorhanden. Das Verhältnis der Datenrate am Ausgang des Bildspeichers zu der Datenrate an seinem Eingang beträgt bei diesem Ausführungsbeispiel 2. Auch hier werden die Daten der Bildpunkte mit einer höheren Taktrate aus dem Bildspeicher ausgelesen, als sie in ihn eingeschrieben werden.

## Patentansprüche

1. Verfahren zum wahlfreien Zugriff auf Bildblöcke in einem aus Zeilen zusammengesetzten Videobild, von dem Bildpunkte mehrerer Zeilen in einem Bildspeicher als Teilbild abgespeichert sind, mit folgenden Verfahrensschritten:
- In einem ersten Bereich (AB) eines Zugriffsspeichers (ZS) wird ein erster Ausschnitt des Teilbildes gespeichert, der so bemessen wird, daß er einen Hauptbildblock (HB) mit x-Bildpunkten in horizontaler Richtung des Teilbildes sowie wenigstens einen in horizontaler Richtung an ihn angrenzenden Nachbarbildblock (NB) mit gleichen Abmessungen umfaßt,
- einer der Bildblöcke (HB, NB) wird aus dem Zugriffsspeicher (ZS) ausgelesen,
- während des Auslesens dieses Bildblocks (HB, NB) wird in einem zweiten Bereich (PB) des Zugriffsspeichers (ZS) ein an dem ersten Ausschnitt horizontal angrenzender Teil des Teilbildes gespeichert, der so gewählt wird, daß er in horizontaler Richtung x-Bildpunkte und in vertikaler Richtung so viele Bildpunkte wie der erste Ausschnitt in vertikaler Richtung enthält,
- in dem ersten Bereich (AB) des Zugriffsspeichers (ZS) wird ein zweiter Ausschnitt des Teilbildes mit gleichen Abmessungen wie der erste Abschnitt gespeichert, der horizontal gegenüber dem ersten Ausschnitt so verschoben ist, daß er den in zweiten Bereich (PB) gespeicherten Teil des Teilbildes vollständig enthält.

2. Verfahren nach Anspruch 1, **dadurch gekennzeichnet, daß**
- der erste Ausschnitt zusätzlich wenigstens einen in vertikaler Richtung an den Hauptbildblock (HB) angrenzenden weiteren Nachbarbildblock (NB) mit gleichen Abmessungen wie der Hauptbildblock (HB) aufweist,
- wenigstens ein Teil der Bildpunkte aus dem zweiten Ausschnitt aus dem Zugriffsspeicher (ZS) ausgelesen wird und
- danach in dem ersten Bereich (AB) des Zugriffsspeichers ein dritter Ausschnitt des Teilbildes gespeichert wird, der vertikal gegenüber dem ersten Ausschnitt so verschoben ist, daß der Hauptbildblock (HB) noch innerhalb des ersten Ausschnitts liegt.

3. Verfahren nach einem der Ansprüche 1 oder 2, **dadurch gekennzeichnet, daß** der Hauptbildblock (HB) rechtekkig gewählt wird und er von 8 angrenzenden Nachbarbildblöcken (NBH, NBV, NBD) umgeben wird.

4. Verfahren nach einem der Ansprüche 1 bis 3, **dadurch gekennzeichnet, daß** der erste Bereich (AB) des Zugriffsspeichers (ZS) mit 48 Bildpunkten in horizontaler und 24 Bildpunkten in vertikaler Richtung und der zweite Bereich (PB) mit 16 x 24 Bildpunkten gewählt wird.

5. Verfahren nach einem der Ansprüche 1 bis 4, **dadurch gekennzeichnet, daß** de Zugriffsspeicher (ZS) als SRAM ausgeführt wird.

6. Verfahren nach einem der Ansprüche 1 bis 5, **dadurch gekennzeichnet, daß** das Videobild ein Halbbild eines zeilenverkämmten Fernsehbildes ist.

## Claims

1. A method for random access to picture blocks in a video picture which is composed of lines and of which pixels of a plurality of lines are stored as sub-picture in a picture memory, having the following method steps:
- a first excerpt of the sub-picture is stored in a first area (AB) of an access memory (ZS), said excerpt being dimensioned such that it encompasses a main picture block (HB) having x pixels in the horizontal direction of the sub-picture and also at least one adjacent picture block (NB) adjoining it in the horizontal direction and having the same dimensions,
- one of the picture blocks (HB, NB) is read out from the access memory (ZS),
- while this picture block (HB, NB) is being read out, a portion of the sub-picture which adjoins the first excerpt horizontally is stored in a second area (PB) of the access memory (ZS), said portion being chosen such that it contains x pixels in the horizontal direction and, in the vertical direction, as many pixels as the first excerpt in the vertical direction.
- a second excerpt of the sub-picture having the same dimensions as the first excerpt is stored in the first area (AB) of the access memory (ZS), said excerpt being shifted horizontally relative to the first excerpt such that it completely contains that portion of the sub-picture which is stored in the second area (PB).

2. The method as claimed in claim 1, **characterized in that**
- the first excerpt additionally has at least one further adjacent picture block (NB) adjoining the main picture block (HB) in the vertical direction and having the same dimensions as the main picture block (HB),
- at least some of the pixels from the second excerpt are read out from the access memory (ZS) and
- afterwards a third excerpt of the sub-picture is stored in the first area (AB) of the access memory, said excerpt being shifted vertically relative to the first excerpt such that the main picture block (HB) still lies within the first excerpt.

3. The method as claimed in either of claims 1 and 2, **characterized in that** the main picture block (HB) is chosen to be rectangular and it is surrounded by eight adjoining adjacent picture blocks (NBH, NBV, NBD).

4. The method as claimed in one of claims 1 to 3, **characterized in that** the first area (AB) of the access memory (ZS) is chosen with 48 pixels in the horizontal direction and 24 pixels in the vertical direction and the second area (PB) is chosen with 16 x 24 pixels.

5. The method as claimed in one of claims 1 to 4, **characterized in that** the access memory (ZS) is embodied as an SRAM.

6. The method as claimed in one of claims 1 to 5, **characterized in that** the video picture is a field of a line-interlaced television picture.

## Revendications

1. Procédé d'accès aléatoire à des blocs d'image dans une image vidéoformée par des lignes, et des pixels de plusieurs lignes de ladite image vidéo sont stockés sous forme d'image partielle dans une mémoire image, comprenant les étapes suivantes :
- un premier secteur de l'image partielle est enregistré dans une première zone (AB) d'une mémoire d'accès (ZS), lequel est dimensionné de telle sorte qu'il comprend un bloc d'image principal (HB) avec x pixels dans le sens horizontal de l'image partielle, ainsi qu'au moins un bloc d'image voisin (NB) adjacent à celui-ci dans le sens horizontal avec les mêmes dimensions,
- un des blocs d'image (HB, NB) est extrait de la mémoire d'accès (ZS),
- pendant la lecture de ce bloc d'image (HB, NB), une partie de l'image partielle horizontalement adjacente au premier secteur est enregistrée dans une deuxième zone (PB) de la mémoire d'accès (ZS), laquelle partie est choisie de telle sorte qu'elle contient dans le sens horizontal x pixels et dans le sens vertical le même nombre de pixels contenus dans le sens vertical du premier secteur .
- un deuxième secteur de l'image partielle, avec les mêmes dimensions que le premier secteur, est enregistré dans la première zone (AB) de la mémoire d'accès (ZS), lequel est décalé horizontalement par rapport au premier secteur de telle sorte qu'il contient intégralement la partie de l'image partielle mémorisée dans la deuxième zone (PB).

2. Procédé selon la revendication 1, **caractérisé en ce que**
- le premier secteur comporte en plus au moins un bloc d'image voisin (NB), adjacent dans le sens vertical au bloc d'image principal (HB) et de même dimension que le bloc d'image principal (HB),
- au moins une partie des pixels du deuxième secteur sont extraits de la mémoire d'accès (ZS), et
- ensuite un troisième secteur de l'image partielle est enregistré dans la première zone (AB) de la mémoire d'accès, lequel est décalé verticalement par rapport au premier secteur, de telle sorte que le bloc d'image principal (HB) est encore situé à l'intérieur du premier secteur.

3. Procédé selon la revendication 1 ou 2, **caractérisé en ce que** le bloc d'image principal (HB) est rectangulaire et est entouré par 8 blocs d'image voisins (NBH, NBV, NBD) adjacents.

4. Procédé selon l'une quelconque des revendications 1 à 3, **caractérisé en ce que** la première zone (AB) de la mémoire d'accès (ZS) contient 48 pixels dans le sens horizontal et 24 pixels dans le sens vertical, et la deuxième zone (PB) est choisie avec 16 x 24 pixels.

5. Procédé selon l'une quelconque des revendications 1 à 4, **caractérisé en ce que** la mémoire d'accès (ZS) est conçue sous forme de mémoire SRAM.

6. Procédé selon l'une quelconque des revendications 1 à 5, **caractérisé en ce que** l'image vidéo est une demi-image d'une image de télévision assemblée par lignes.
